# EUROPÄISCHE PATENTANMELDUNG

(11) **EP 1 944 636 A1**
(43) Veröffentlichungstag der Anmeldung: **16.07.2008**
(21) Anmeldenummer: 07024887.7
(22) Anmeldetag: 21.12.2007
(51) Int. Cl.: G02B 6/44

(54) **Lichtwellenleiterverteilereinrichtung**

(30) Priorität: 09.01.2007 DE 202007000556 U
(71) Anmelder: CCS Technology, Inc., Wilmington, DE 19803 (US)
(72) Erfinder: Fröhlich, Franz-Friedrich, Dipl.-Ing., 58091 Hagen (DE); Lapp, Oliver, Dipl.-Ing., 42399 Wuppertal (DE); Müller, Michael, Dipl.-Ing., 58706 Menden (DE)
(74) Vertreter: Sturm, Christoph

(57) **Zusammenfassung**

Die Erfindung betrifft eine Lichtwellenleiterverteilereinrichtung, nämlich Wandverteiler, mit einem Gehäuse (11) und mit in dem Gehäuse angeordneten Baugruppen, insbesondere Spteißkassetten und/oder Steckverbindern, zur Handhabung von Lichtwellenleitern, wobei das Gehäuse (11) einen modularen Aufbau aufweist. Erfindungsgemäß umfasst das Gehäuse (11) mehrere miteinander verbindbare Grundmodule (17), die identische Abmessungen und einen identischen Aufbau aufweisen, sodass das Gehäuse (11) in einem definierten Raster in mindestens einer Richtung derart erweiterbar ist, dass in der jeweiligen Erweiterungsrichtung das Gehäuse (11) einen durchgehenden Innenraum (12) zur Aufnahme der Baugruppen zur Handhabung von Lichtwellenleitern definiert.

## Beschreibung

Die Erfindung betrifft eine Lichtwellenleiterverteilereinrichtung, nämlich einen Wandverteiler, gemäß dem Oberbegriff des Anspruchs 1.

Aus dem Produktkatalog "Zubehör für LWL-Kabelnetze, Ausgabe 1, Seite 184, Jahr 2001, Coming Cable Systems GmbH & Co. KG" ist eine als Wandverteiler ausgebildete Lichtwellenleiterverteilereinrichtung bekannt. Der dort offenbarte Wandverteiler verfügt über ein Gehäuse sowie über in einem Innenraum des Gehäuses angeordnete Baugruppen, nämlich Spleißkassetten und/oder Steckverbinder, zur Handhabung von Lichtwellenleitern. Das Gehäuse des Wandverteilers verfügt über eine Rückwand, wobei mit der Rückwand eine Dachwand, eine Bodenwand sowie Seitenwände fest verbunden sind. Es ist demnach nicht möglich, den Innenraum des Gehäuses zu erweitern. Daher müssen dann, wenn der vom Gehäuse definierte Innenraum nicht ausreichend ist, mehrere Wandverteiler nebeneinander positioniert und in benachbarte Wände benachbarter Wandverteiler Durchbrüche eingebracht werden, um Lichtwellenleiter zwischen benachbarten Wandverteilern zu überführen.

Aus der DE 298 18 507 U1 ist ein Wandverteiler bekannt, dessen Gehäuse einen modularen Aufbau aufweist. So sind zur Erweiterung des von einem Wandverteiler breitgestellten Innenraums mehrere Grundmodule miteinander verbindbar, wobei die Grundmodule unterschiedliche Abmessungen aufweisen. Jedes Grundmodul verfügt über eine C-förmige Kontur mit einer Rückwand, einer Bodenwand sowie einer Dachwand, wobei Rückwand, Bodenwand und Dachwand U-förmig umgebogene Randbereiche aufweisen. Hierdurch entstehen nach dem Verbinden von Grundmodulen innenraumseitige Absätze an der Rückwand, Dachwand sowie Bodenwand des sich ausbildenden Gehäuses.

Hiervon ausgehend liegt der vorliegenden Erfindung das Problem zu Grunde, eine neuartige Lichtwellenleiterverteilereinrichtung, nämlich einen neuartigen Wandverteiler, zu schaffen.

Dieses Problem durch eine Lichtwellenleiterverteilereinrichtung nach Anspruch 1 gelöst. Erfindungsgemäß umfasst das Gehäuse mehrere miteinander verbindbare Grundmodule, die identische Abmessungen und einen identischen Aufbau aufweisen, sodass das Gehäuse in einem definierten Raster in mindestens einer Richtung derart erweiterbar ist, dass in der jeweiligen Erweiterungsrichtung das Gehäuse einen durchgehenden Innenraum zur Aufnahme der Baugruppen zur Handhabung von Lichtwellenleitern definiert.

Vorzugsweise weist jedes Grundmodul eine Rückwand auf, wobei nach dem Verbinden mehrerer Grundmodule das Gehäuse zur Begrenzung des Innenraums innenraumseitig eine absatzfreie Rückwand aufweist, sodass Baugruppen zur Handhabung von Lichtwellenleitern über den Bereich aneinadergrenzender Rückwände benachbarter Grundmodule hinweg an denselben montierbar sind.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:
- Fig. 1:: eine erste Konfiguration einer erfindungsgemäßen Lichtwellenleiterverteilereinrichtung nach einem ersten Ausführungsbeispiel der Erfindung;
- Fig. 2:: die Lichtwellenleiterverteilereinrichtung der Fig. 1 in einer Explosionsdarstellung;
- Fig. 3:: eine zweite Konfiguration einer erfindungsgemäßen Lichtwellenleiterverteilereinrichtung nach einem ersten Ausführungsbeispiel der Erfindung;
- Fig. 4:: die Lichtwellenleiterverteilereinrichtung der Fig. 3 in einer Explosionsdarstellung;
- Fig. 5:: eine erste Konfiguration einer erfindungsgemäßen Lichtwellenleiterverteilereinrichtung nach einem zweiten Ausführungsbeispiel der Erfindung;
- Fig. 6:: die Lichtwellenleiterverteilereinrichtung der Fig. 5 in einer Explosionsdarstellung; und
- Fig. 7:: eine zweite Konfiguration einer erfindungsgemäßen Lichtwellenleiterverteilereinrichtung nach einem zweiten Ausführungsbeispiel der Erfindung.

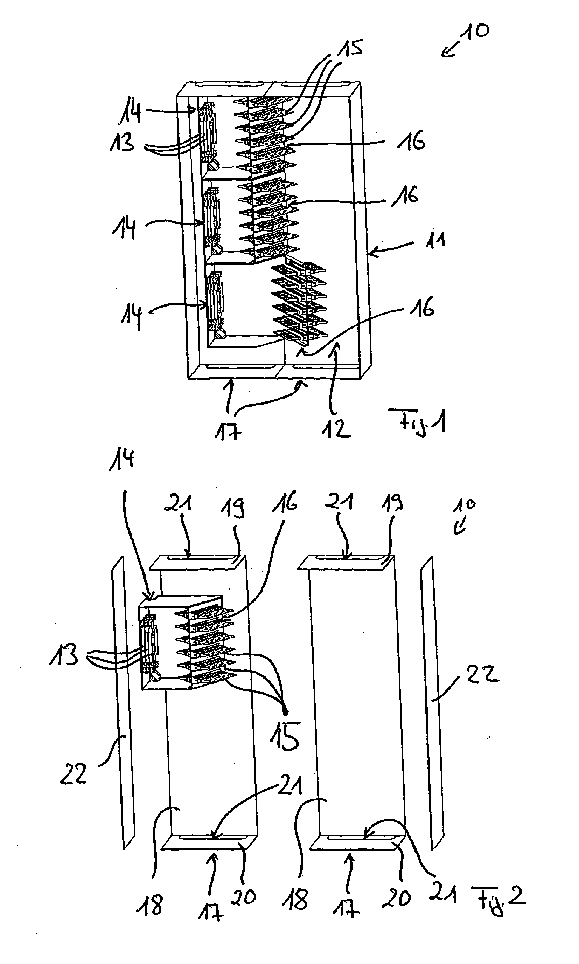

Fig. 1 und 2 zeigen eine erste Konfiguration eines erfindungsgemäßen Wandverteilers 10 nach einem ersten Ausführungsbeispiel der Erfindung, wobei die Fig. 1 den Wandverteiler 10 in zusammengebautem Zustand und die Fig. 2 denselben in einer Explosionsdarstellung zeigt.

Der Wandverteiler 10 der Fig. 1 und 2 verfügt über ein Gehäuse 11, welches einen Innenraum 12 zur Aufnahme von Baugruppen zur Handhabung von Lichtwellenleitern definiert. Gemäß Fig. 1 sind in dem Innenraum 12 mehrere Baugruppen zum Handhaben von Lichtwellenleitern angeordnet, nämlich insgesamt drei mehrere Spleißkassetten 13 aufweisende Spleißkassettenhalter 14, wobei jedem Spleißkassettenhalter 14 ein mehrere Steckverbinder 15 tragendes Anschlussfeld 16 zugeordnet ist. Das einem Spleißkassettenhalter 14 zugeordnete Anschlussfeld 16 ist am Spleißkassettenhalter schwenkbar montiert.

Das Gehäuse 11 des erfindungsgemäßen Wandverteilers 10 verfügt über einen modularen Aufbau, wobei im gezeigten Ausführungsbeispiel das Gehäuse 11 zwei miteinander verbindbare Grundmodule 12 umfasst, die identische Abmessungen sowie einen identischen Aufbau aufweisen.

Im Ausführungsbeispiel der Fig. 1 und 2 verfügt jedes Grundmodul 12 über eine geschlossene Rückwand 18 sowie eine mit der Rückwand 18 fest verbundene Dachwand 19 und eine ebenfalls mit der Rückwand 18 fest verbundene Bodenwand 20. Sowohl in die Dachwand 19 als auch in die Bodenwand 20 der Grundmodule 17 sind Ausnehmungen 21 eingebracht, um Lichtwellenleiter in das Gehäuse 11 des Wandverteilers 10 einzuführen bzw. aus demselben auszuführen.

Im Ausführungsbeispiel der Fig. 1 und 2 ist demnach das Gehäuse 11 ausschließlich in einer einzigen Richtung in einem definierten Raster erweiterbar, wobei dieses Raster durch die Breite der Grundmodule 17 definiert wird. Beim Verbinden von Grundmodulen 17 entsteht eine geschlossene Rückwand 18, die innenraumseitig absatzfrei ist. Insofern können Baugruppen zur Handhabung von Lichtwellenleitern über aneinandergrenzende Rückwände 18 benachbarter Module 17 hinweg an denselben montiert werden. Der von mehreren Modulen 17 definierte Innenraum 12 des Wandverteilers 10 steht demnach ungehindert zur Aufnahme von Baugruppen, die der Handhabung von Lichtwellenleitern dienen, zur Verfügung.

Bei Verbindung mehrerer Grundmodule 17 entsteht im Ausführungsbeispiel der Fig. 1 und 2 nicht nur eine geschlossene sowie innenraumseitig absatzfreie Rückwand des Gehäuses 11, vielmehr entsteht auch eine durchgehende sowie innenraumseitig absatzfreie Dachwand sowie Bodenwand des Gehäuses 11.

Zur weiteren Begrenzung des Innenraums 12 sind an außenliegenden Grundmodulen 12, nämlich an außenliegenden Seiten bzw. Rändern dieser außenliegenden Grundmodule 12, zwischen der Dachwand 19 und der Bodenwand 20 des jeweiligen Grundmoduls 17 Seitenwände 22 montierbar. Weiterhin können gegebenenfalls Türen zur Abschließung des Innenraums an einer der Rückwand 18 gegenüberliegenden Seite des Gehäuses 11 zwischen Dachwand 19 und Bodenwand 20 der Grundmodule 17 eingehängt werden.

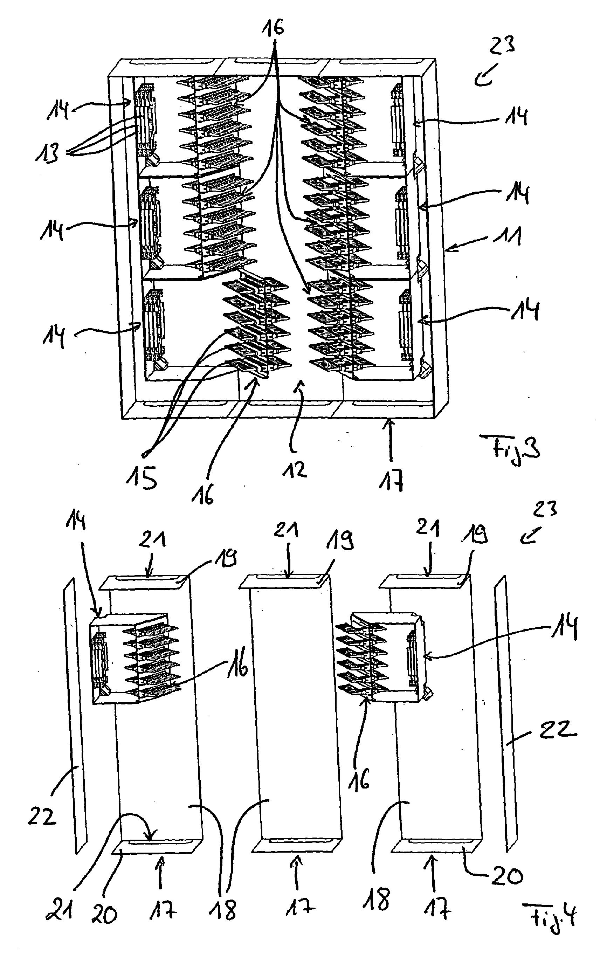

Eine zweite Konfiguration eines erfindungsgemäßen Wandverteilers 23 nach der ersten Ausführungsform der hier vorliegenden Erfindung zeigen Fig. 3 und 4, wobei sich das Ausführungsbeispiel der Fig. 3 und 4 vom Ausführungsbeispiel der Fig. 1 und 2 lediglich durch die Anzahl der Grundmodule 17 sowie der im Innenraum 12 des Gehäuses 11 des Wandverteilers 23 aufgenommenen Baugruppen zur Handhabung von Lichtwellenleitern unterscheidet. Daher werden zur Vermeidung unnötiger Wiederholungen für gleiche Baugruppen gleiche Bezugsziffern verwendet.

So unterscheidet sich das Ausführungsbeispiel der Fig. 3 und 4 vom Ausführungsbeispiel der Fig. 1 und 2 lediglich dadurch, dass im Ausführungsbeispiel der Fig. 3 und 4 drei identische Grundmodule 17 zum Gehäuse 11 zusammengesetzt sind. Hierdurch kann ein vergrößerter Innenraum 12 des Wandverteilers 23 bereitgestellt werden, um eine größere Anzahl von Spleißkassettenhaltem 14 und Anschlussfeldern 16 im Innenraum 12 des Wandverteilers 23 aufzunehmen. Hinsichtlich aller übrigen Details kann auf die Ausführungen zu Fig. 1 und 2 verwiesen werden.

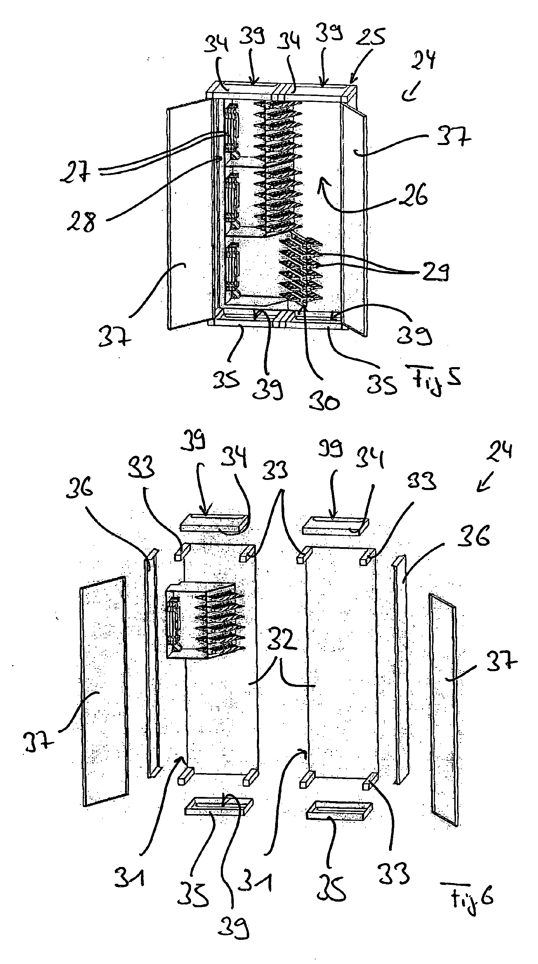

Eine erste Konfiguration eines Wandverteilers 24 nach einem zweiten Ausführungsbeispiel der hier vorliegenden Erfindung zeigen Fig. 5 und 6, wobei Fig. 5 den Wandverteiler 24 in zusammengebautem Zustand und Fig. 6 denselben in einer Explosionsdarstellung zeigt.

Der Wandverteiler 24 gemäß Fig. 5 und 6 verfügt wiederum über ein Gehäuse 25, welches einen Innenraum 26 zur Aufnahme von Baugruppen zur Handhabung von Lichtwellenleitem definiert. Bei diesen Baugruppen handelt es sich in Übereinstimmung zu den Ausführungsbeispielen der Fig. 1 bis 4 wiederum um mehrere Spleißkassetten 27 aufnehmende Spleißkassettenhalter 28 sowie um mehrere Steckverbinder 29 aufnehmende Anschlussfelder 30.

Das Gehäuse 25 des Wandverteilers 24 verfügt wiederum über einen modularen Aufbau und umfasst mehrere, in der Variante gemäß Fig. 5 und 6 zwei, Grundmodule 31 mit identischem Aufbau sowie identischen Abmessungen. Jedes der Grundmodule 31 verfügt über eine Rückwand 32 sowie an Ecken der Rückwand 32 angeordnete, mit der Rückwand 32 festverbundene sowie gegenüber der Rückwand 32 vorstehende Streben 33.

Demnach kann das Gehäuse 25 des Wandverteilers 24 der Fig. 5 und 6 im Unterschied zu den Ausführungsbeispielen der Fig. 1 bis 4 nicht lediglich in einer Richtung in einem definierten Raster erweitert werden, sondern vielmehr in zwei Richtungen, wobei das Raster in einer ersten Richtung durch die Breite des Grundmoduls 31 und in einer zweiten Richtung durch die Höhe desselben definiert wird.

Durch Verbindung mehrerer Grundmodule wird eine Grundstruktur des Gehäuses 25 geschaffen, die eine geschlossene und innenraumseitig absatzfreie Rückwand aufweist.

Zur weiteren Begrenzung des Innenraums 26 des Gehäuses 25 sind zwischen Streben 33 seitlicher Grundmodule 31 Dachwände 34, Bodenwände 35 und Seitenwände 36 positionierbar. Weiterhin sind zur Begrenzung des Innenraums 26 zwischen den Streben 33 der Grundmodule 31 Türen 37 einhängbar.

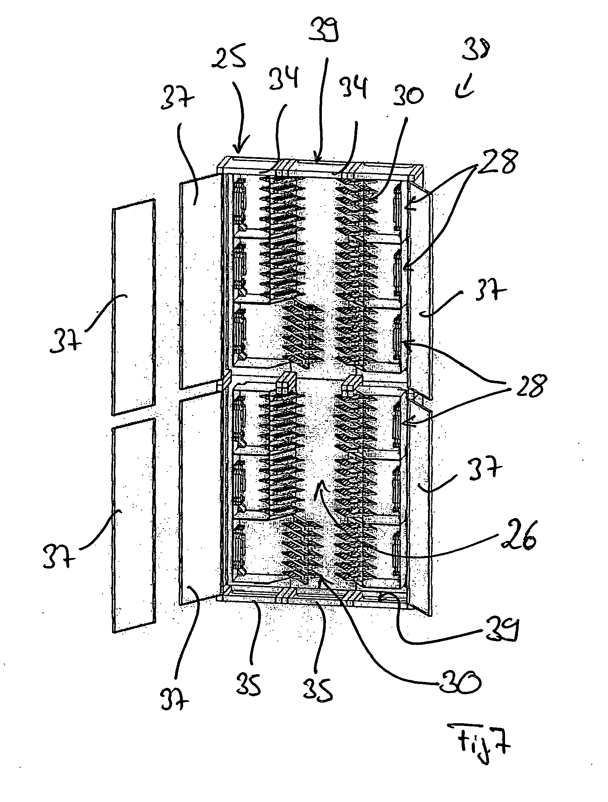

Fig. 7 zeigt eine zweite Konfiguration eines erfindungsgemäßen Wandverteilers 38 nach der zweiten Ausführungsform der hier vorliegenden Erfindung, wobei sich die Konfiguration der Fig. 7 von der Konfiguration der Fig. 5 und 6 lediglich durch die Anzahl der Grundmodule 31 sowie der im durch die Grundmodule 31 aufgespannten Innenraum 26 aufgenommenen Baugruppen zur Handhabung von Lichtwellenleitern unterscheidet. Daher werden für den Wandverteiler 38 der Fig. 7 gleiche Bezugsziffern verwendet wie für den Wandverteiler 24 der Fig. 5 und 6.

So sind in der Konfiguration des Wandverteilers 38 gemäß Fig. 7 insgesamt sechs Grundmodule 31 miteinander verbunden, wobei jeweils drei Grundmodule nebeneinander und jeweils zwei Grundmodule übereinander positioniert sind. Hierdurch wird gegenüber Fig. 6 der Innenraum 26 sowohl in horizontaler Richtung als auch in vertikaler Richtung, also in zwei Dimensionen, vergrößert. Dabei wird ein durchgehender Innenraum 26 geschaffen, in den allenfalls innenlegende Streben 33 benachbarter Grundmodule 31 hineinragen. Die geschlossene Rückwand ist abgesehen von den Streben innenraumseitig frei von Absätzen.

In die Dachwände 34 und Bodenwände 35 sind wiederum Ausnehmungen 39 eingebracht, um Lichtwellenleiter in das Gehäuse des Wandverteilers 23 bzw. 38 einzuführen bzw. aus demselben auszuführen.

Beiden Ausführungsformen der hier vorliegenden Erfindung ist gemeinsam, dass das Gehäuse der Wandverteiler einen derartigen modularen Aufbau aufweist, dass durch Verwendung von Grundmodulen, die identische Abmessungen und einen identischen Aufbau aufweisen, das Gehäuse in einem definierten Raster erweitert werden kann. In der Ausführungsform der Fig. 1 bis 4 ist das Gehäuse ausschließlich in einer Richtung unter Bereitstellung eines durchgehenden Innenraums erweiterbar, in der Ausführungsform gemäß Fig. 5 bis 7 hingegen ist das Gehäuse in zwei Richtungen unter Bereitstellung des durchgehenden Innenraums erweiterbar.

In beiden Ausführungsformen wird durch die modulare Erweiterung ein Gehäuse mit einer geschlossenen Rückwand bereitgestellt, die innenraumseitig absatzfrei ausgebildet ist. Hierdurch können über aneinander grenzende Rückwand benachbarter Grundmodule hinweg Baugruppen zum Handhaben von Lichtwellenleitern an den Rückwänden montiert werden.

### Bezugszeichenliste

- 10: Wandverteiler
- 11: Gehäuse
- 12: Innenraum
- 13: Spleißkassette
- 14: Spleißkassettenhalter
- 15: Steckverbinder
- 16: Anschlussfeld
- 17: Grundmodul
- 18: Rückwand
- 19: Dachwand
- 20: Bodenwand
- 21: Ausnehmung
- 22: Seitenwand
- 23: Wandverteiler
- 24: Wandverteiler
- 25: Gehäuse
- 26: Innenraum
- 27: Spleißkassette
- 28: Spleißkassettenhalter
- 29: Steckverbinder
- 30: Anschlussfeld
- 31: Grundmodul
- 32: Rückwand
- 33: Strebe
- 34: Dachwand
- 35: Bodenwand
- 36: Seitenwand
- 37: Tür
- 38: Wandverteiler
- 39: Aufnehmung

## Patentansprüche

1. Lichtwellenleiterverteilereinrichtung, nämlich Wandverteiler, mit einem Gehäuse und mit in dem Gehäuse angeordneten Baugruppen, insbesondere Spleißkassetten und/oder Steckverbindern, zur Handhabung von Lichtwellenleitern, wobei das Gehäuse einen modularen Aufbau aufweist, **dadurch gekennzeichnet, dass** das Gehäuse (11; 25) mehrere miteinander verbindbare Grundmodule (17; 31) umfasst, die identische Abmessungen und einen identischen Aufbau aufweisen, sodass das Gehäuse (11; 25) in einem definierten Raster in mindestens einer Richtung derart erweiterbar ist, dass in der jeweiligen Erweiterungsrichtung das Gehäuse (11; 25) einen durchgehenden Innenraum (12; 26) zur Aufnahme der Baugruppen zur Handhabung von Lichtwellenleitern definiert.

2. Lichtwellenleiterverteilereinrichtung nach Anspruch 1, **dadurch gekennzeichnet, dass** jedes Grundmodul (17; 31) eine Rückwand (18; 32) aufweist, wobei nach dem Verbinden mehrerer Grundmodule (17; 31) das Gehäuse (11; 25) zur Begrenzung des Innenraums eine innenraumseitig absatzfreie Rückwand aufweist, sodass Baugruppen zur Handhabung von Lichtwellenleitem über aneinadergrenzende Rückwände benachbarter Grundmodule hinweg an denselben montierbar sind.

3. Lichtwellenleiterverteilereinrichtung nach Anspruch 1 oder 2, **dadurch gekennzeichnet, dass** das Gehäuse (11) in einem definierten Raster, das der Breite des Grundmoduls (17) entspricht, in ausschließlich einer Richtung und unter Bereitstellung des durchgehenden Innenraums (12) erweiterbar ist.

4. Lichtwellenleiterverteilereinrichtung nach Anspruch 3, **dadurch gekennzeichnet, dass** jedes Grundmodul (17) eine geschlossene Rückwand (18), eine mit der Rückwand fest verbundene, vorzugsweise Ausnehmungen aufweisende Dachwand (19) sowie eine ebenfalls mit der Rückwand fest verbundene, vorzugsweise Ausnehmungen aufweisende Bodenwand (20) aufweist, sodass nach dem Verbinden mehrerer Grundmodule (17) das Gehäuse (11) die geschlossene und innenraumseitig absatzfreie Rückwand sowie eine durchgehende und absatzfreie Dachwand sowie Bodenwand aufweist.

5. Lichtwellenleiterverteilereinrichtung nach Anspruch 4, **dadurch gekennzeichnet, dass** zur weiteren Begrenzung des Innenraums (12) zwischen der Dachwand (19) und der Bodenwand (20) seitlicher Grundmodule (17) Seitenwände (22) positionierbar sind.

6. Lichtwellenleiterverteilereinrichtung nach Anspruch 1, **dadurch gekennzeichnet, dass** das Gehäuse (25) in einem ersten definierten Raster, das der Breite des Grundmoduls (31) entspricht, in einer ersten Richtung und in einem zweiten definierten Raster, das der Höhe des Grundmoduls (31) entspricht, in einer zweiten Richtung unter Bereitstellung des durchgehenden Innenraums (26) erweiterbar ist.

7. Lichtwellenleiterverteilereinrichtung nach Anspruch 6, **dadurch gekennzeichnet, dass** jedes Grundmodul (31) eine geschlossene Rückwand (32) sowie gegenüber der Rückwand (32) vorstehende Streben (33) aufweist, sodass nach dem Verbinden mehrerer Grundmodule (31) das Gehäuse die geschlossene und innenraumseitig absatzfreie Rückwand aufweist, wobei allenfalls innenliegende Streben benachbarter Grundmodule in den durchgehenden Innenraum hineinragen.

8. Lichtwellenleiterverteilereinrichtung nach Anspruch 7, **dadurch gekennzeichnet, dass** zur weiteren Begrenzung des Innenraums (26) des Gehäuses (25) zwischen Streben (33) seitlicher Grundmodule (21) Dachwände (34), Bodenwände (25) und Seitenwände (36) positionierbar sind.

9. Lichtwellenleiterverteilereinrichtung nach Anspruch 7 oder 8, **dadurch gekennzeichnet, dass** zur weiteren Begrenzung des Innenraums des Gehäuses (25) zwischen Streben (33) der Grundmodule (31) Türen (37) einhängbar sind.
